# EUROPEAN PATENT SPECIFICATION

(11) **EP 2 411 546 B1**
(45) Date of publication and mention of the grant of the patent: **03.07.2013**
(21) Application number: 10740757.9
(22) Date of filing: 25.03.2010
(51) Int. Cl.: C13B 20/00, C13B 20/02, C13B 20/12, C13B 20/16

(54) **METHOD FOR PRODUCING CLARIFIED JUICE, PACKAGIBLE JUICE, ETHANOL AND SUGAR FROM SUGARCANE AND SYSTEM THEREOF**
VERFAHREN ZUR HERSTELLUNG VON GEKLÄRTEM SAFT, VERPACKBAREM SAFT, ETHANOL UND ZUCKER AUS ZUCKERROHR UND SYSTEM DAFÜR
PROCÉDÉ DE PRODUCTION D'UN JUS DE FRUIT CLARIFIÉ, D'UN JUS DE FRUIT POUVANT ÊTRE CONDITIONNÉ, D'ÉTHANOL ET DE SUCRE À PARTIR DE LA CANNE À SUCRE ET SYSTÈME ASSOCIÉ

(30) Priority: 26.03.2009 IN MU07332009
(43) Date of publication of application: 01.02.2012
(73) Proprietor: Kulkarni, Vishnukumar Mahadeo, Pune 411 029 (IN); Kulkarni, Umesh Venkatesh, Pune 411 009, Maharashtra (IN)
(72) Inventor: Kulkarni, Vishnukumar Mahadeo, Pune 411 029 (IN); Kulkarni, Umesh Venkatesh, Pune 411 009, Maharashtra (IN)
(74) Representative: French, Philip Joseph
(86) International application number: PCT/IN2010/000186
(87) International publication number: WO 2010/109489

(56) References cited:
- WO-A1-01/16380
- US-A- 3 694 262
- US-A1- 2005 016 145
- DATABASE WPI Week 200977 Thomson Scientific, London, GB; AN 2009-R37996 XP002603650 & IN 190 474 B (KULKARNI V M) 2 August 2003 (2003-08-02)
- KULKARNI, V.M.: "A Novel Method to Evaluate Efficacy of Mill Sanitation Biocides: Reducing Sugar and Titrable Acidity Analysis of Final Molasses" SUGAR TECH 1999, pages 54-62, XP002603651 Retrieved from the Internet: URL:http://www.springerlink.com/content/11 11116183t03h63/ [retrieved on 2010-10-06]

## Description

### FIELD OF THE INVENTION:

This invention relates to a method of producing clarified juice from sugarcane, packagible sugarcane juice and fermenting the juice to produce ethanol or sugar and the systems thereof.

### BACKGROUND ART OF THE INVENTION:

Sugarcane juice is most nutritive drink that contains lots of minerals essential for life. Sugarcane juice is not only used for drinking purpose but also use for producing ethanol and sugar.

In sugar manufacturing process, sugarcane juice is extracted by milling after cutting and shredding the sugarcane and then mixed juice is formed. This mixed juice contains lots of bagasse I bagacillo (fine particles of bagasse), mud from farm carried along with the sugarcane, and other organic and inorganic colloidal and soluble impurities with sucrose. This mixed juice usually has acidic pH about 5.5 or less. This acidity of the juice depends on cane variety, maturity, freshness and extent microbial infection to the sugarcane from harvesting to milling. This mixed juice after various clarification treatments passed through the series of juice heater to raise the temperature of the juice above 60-70° C. Lime is injected in the heated juice to raise the pH of the juice to 8.5-9.5 and passed through the sulfiter for treating with SO₂. The neutral sulfited juice is then passed through another set of heaters to heat the juice above about 115°C. This heated juice is then sent to the Dorr clarifier where settling aids / flocculating agents may be added to promote juice clarification. The overflow of clarifier called as clarified juice is then evaporated in series of juice evaporators to about 50 - 60% concentration, called as syrup; which is then processed in A, B, C mesquite (pan) boiling system well known to sugar technologists to produce crystalline sugar. The sugar obtained from A and B mesquite boiling system is forwarded to packing whereas the sugar obtained from C mesquite boiling system is generally re-circulated to A and B mesquite boiling system. This sugar is a double cured sugar and comprises lots of impurities (purity about 94pol) and has color of about 1000 - 2000 IU, melting of such sugar increases recirculation of impurities and thus color and quality of sugar is affected. The mud form the bottom of the clarifier is taken to Oliver filter to separate mud as filter cake and filtered juice is returned to the process either in mixed juice or in clear juice or as per demand of the process as decided by chemists. This filtered juice also has lots of impurities and is known as one of the major reasons of impurity rise in the sugar.

The products of sugar processing industries are sugar, and molasses and the other products are mud / filter cake, bagasse. The molasses contains sugars and remaining impurities. This molasses is used to produce alcohol by fermenting the molasses using yeast. However, the molasses quantity is not sufficient to produce required quantity of alcohol and thus there is need to develop viable technology to produce alcohol from other sources like sweet sorghum juice, secondary juice or even sugarcane juice directly or other in - house process raw materials.

The problems in the present sugar manufacturing process are as follows:
- Ingression of impurities and micro organisms when the cane is cut for harvesting and transported;
- Unhindered microbial growth at every stage of sugar juice processing;
- Retention time of 45 to 200 minutes is required in present clarification system depending on the design of the clarifiers (Dorr clarifier.
- Clarification process practiced currently is known to increase calcium content of the clarified juice. This would increase scaling problems for distillation column and reduces heat transfer there by increasing cost of distillation. Presence of organic matter worsens the scaling problem and makes cleaning of scales significantly difficult
- During clarification, temperature is required to be maintained which consumes energy, especially at Dorr clarifier temperature must be above 105° C.
- High temperature destroys reducing sugars that may lead in increase in the color.
- High temperature favors inversion of sugar, hence lot of sucrose is converted to reducing sugars, and quantity varies with retention time, pH and temperature of the clarifier.
- Due to very high temperature in Dorr compounded with un-reacted lime and SO₂ molecules, extraction of high molecular weight polymers, organic compounds and/or coloring matter is leached out from bagasse present in the juice. This reduces the overall efficiency of clarification process.
- Due to liming and sulfitation steps, calcium content of the juice increase which being non sugar leads in increase in molasses formation and scaling problems and thus increases energy requirement, which further increase chemical consumption required for cleaning leading in decrease in plant life and also reduces sugar quantity as well as quality.
- Clarification process used in sugar industry employs heating of the juice above 100°C leading in removal of essential flavoring compounds and also decrease in the shelf life of the sugar.
- Oliver filter too is high power consuming and are just used for dewatering the mud that is coming out of Dorr settler.

The sugar loss takes place at various steps in sugar industry during the treatment over the juice. The steps at which sugar loss takes place are as follows:
- During milling due to growth of microorganisms;
- Due to heating of juice and treatment of lime to raise pH to alkaline range where reducing sugars are converted to organic acids and then neutralizing it with sulfur dioxide gas;
- Maintaining juice above 100°C for about 2 hours at Dorr clarifier, this causes inversion of sucrose to reducing sugars and also conversion of RS to organic acids. Microbes growing at high temperature also convert sugar to organic acids. This acid increases inversion of sucrose;
- During concentration of juice, inversion continues and also growth of microbes growing at high temperature.

Further, there are several impurities present in the sugarcane juice that can adversely affect fermentation. The most important amongst them is microorganisms which affects processing of juice and leads fermentation in many ways:
smicrobes degrades sugars at rapid rate to form several metabolites till they are eliminated. Thus more time we take to kill them more are the sugar loss.
• Heating of the juice for clarification reduces microbial load substantially, however, does not eliminate it totally.
• Due to minute size, the surface to volume ratio of bacteria is more and thus bacterial metabolism is faster than that of yeast.
• Presence of these bacteria competes competitively with yeast for sugars present in the fermentation broth. Bacterial growth rate (multiplication) is faster than yeast making lesser sugars available to yeast to produce alcohol, thus alcohol yield is affected adversely.
• Microbial metabolites, mostly organic acids being volatile can adversely affect alcohol qualitatively.
• Bacterial growth can affect yeast coagulation that can hinder in the distillation process.

Though, sugarcane juice is healthy and nutritive drink, many people hesitate to consume sugarcane juice as contaminated sugarcane juice is also responsible for spreading many gastrointestinal and other diseases. The main reason for this is the fact that sugarcane being most nutritive, it protects and supports the growth of microorganisms, many of them are pathogenic. Many attempts have been made for packaging of the juice however failed as sugarcane juice contains plenty microbes which can grow and spoil the juice attempted to pack.

Indian patent specification, IN 190474 discloses a process to make a dithiocarbamate biocide composition for rapid action to kill 90% of the micro-organisms in cane juice in 10 minutes. This document further discloses that biocides presently used can be classified into three groups a) halogen based, b) quaternary ammonium compounds and c) dithiocarbamate based chemicals. It discloses that dithiocarbamate biocides are preferred but biocides need to kill most of the microbes in 10 minutes and that the 'time frame' aspect has not been considered while designing biocide compositions (Kulkarni 2001 a Proc 50th DSTA Annual Convention, Pune M 38-42; Kulkarni 2001b Proc Sugar Industry Technology Seminar, Taipei, Taiwan, ROC).

### SUMMARY OF THE INVENTION:

It is the object of the present invention to provide a method for producing sugarcane juice for packaging the juice or for producing the sugar or ethanol, which atleast solves the abovementioned problem.

It is the object of the present invention to provide systems for the methods of the present invention.

Accordingly, the present invention in first embodiment provides a method for producing clarified juice from sugarcane comprising steps of: washing sugarcane with water having biocide wherein the biocide is aqueous formulation of Formula I comprising alone or a mixture of compound selected from a group of ammonium compound, gluteraldehyde or chlorine releasing compounds, hydrogen peroxide, and peroxy acetic acid; passing washed sugarcane through cutter and shredders for removing mud and reducing microbial population; spraying biocide on the cut and prepared sugarcane to reduce the microbial activity wherein the biocide is aqueous formulation of Formula II comprising mixture of synergistically acting solutions of sodium and / or potassium salts of methyl,& / or dimethyl, & / or ethyl & / or cyanodiethyl dithiocarbamates 25 - 50% w/w preferably 40 ± 0.5% w/w; one or in combination of amine based, polymer based, phosphate based, phosphonate based, organosulfur based, quinine based chelating / sequestrating /penetrating compound 0.01 to 5 % w/w; and 0 to 10 parts of foaming or non - foaming type dispersant/chelating agent formulated to kill about 90% microbes in one minute; cutting and shredding the sugarcane; adding biocide while milling of the sugarcane or in juice collectors to have control over the microbial growth wherein the biocide added during milling or in the juice collector is aqueous formulation of Formula III comprising: a mixture of synergistically acting solutions of sodium and / or potassium salts of methyl,& / or dimethyl, & / or ethyl & / or cyanodiethyl dithiocarbamates 25 - 50% w/w preferably 40 ± 0.5% w/w, and 0 to 10 parts of foaming or non - foaming type dispersant/chelating agent formulated to kill about 90% microbes in ten minute; filtering the juice to remove floating/suspended matters; heating the filtered juice at 35-85 deg C; mixing one or more coagulating and flocculating agents for coagulation of suspended solids; and separating the coagulated solids to obtain clarified juice having negligible microbes less than 500 cfu per ml.

In second embodiment, the present invention provides a method for producing ethanol comprising steps of fermenting the clarified juice obtained from the method first embodiment of the present invention by adding fermenting agents such as ethanol, yeast e.g. Saccharomyces spp. etc.

In third embodiment, the present invention provides a method for manufacturing juice for packaging comprises steps of: filtering of clarified juice obtained from first embodiment of the present invention; and pasteurizing and packaging the juice wherein the juice has shelf life about six month as the microbial activity is substantially equal to zero.

In forth embodiment, the present invention provides a method for manufacturing sugar from the sugarcane comprises steps of: adding lime in the clarified juice obtained from the first embodiment of the present invention to raise the pH of the juice in the range of 6-9; heating the juice to flocculate proteins; separating the juice from flocculated proteins; concentrating protein-free juice through settler floater to remove suspended and floating matters; and crystallizing the juice to obtain sugar. Alternatively, the juice from the third embodiment can be used.

In fifth embodiment, the present invention also provides a system for producing a clarified juice from sugarcane comprising: a washing means for washing sugarcane with water and biocide for reducing microbial population; a spraying means for spraying biocides solution on prepared cane before entry to cutter and / or shredder for reducing microbial activity; cutter and shredders for cutting and shredding the sugarcane; a series of mills for extraction of juice form sugarcane; a means for adding biocide in the juice during milling or in juice collectors of the mills; a series of mills for extraction of juice form sugarcane; a means for adding biocide in the juice during milling or in juice collectors of the mills; a gravity filter for filtering the juice; a heater for heating the filtered juice at 35-85 deg C; a mixer for mixing coagulating agent and flocculating agent in the heated juice; and a separating means for separating coagulated matters to obtain clarified juice wherein said clarified juice negligible microbes less than 500 cfu per ml.

In sixth embodiment the present invention provides a system for producing juice for packaging comprising a system for producing a clarified juice of fifth embodiment; a filter for filtering the clarified juice; and pasteurizing and packaging means for the filtered juice.

In seventh embodiment, the present invention provides a system for producing a clarified juice as claimed in claim 7; a series of heater for the heating juice at 80-100 deg C; a separating means for separating the heated juice from flocculated proteins; a filtering means for filtering the protein free juice; a concentrating means for concentrating the juice; and a crystallizing means for producing sugar. Alternatively, a system for producing juice for packaging can be used instead of system for clarified juice.

It will be understood that, although the terms first, second, third etc., may be used herein above to describe various embodiments of the invention and these embodiments should not be limited by these terms. These terms are only used to distinguish one embodiment from another embodiment/s. Thus, a first discussed below could be termed a second without departing from the teachings of the present invention.

### BRIEF DESCRIPTION OF THE DRAWINGS:

So that the manner in which the above recited features of the present invention can be understood in detail, a more particular description of the invention, briefly summarized above, may be had by reference to various embodiments, some of which are illustrated in the appended drawings. It is to be noted, however, that the appended drawings illustrate only typical embodiments of this invention and are therefore not to be considered limiting of its scope, for the invention may admit to other equally effective embodiments:
Figure 1 shows a system for producing clarified juice from sugarcane according to the present invention;
Figure 2 shows a system for producing juice for packaging according to the present invention;
Figure 3 shows a system for producing sugar according to the present invention;
Figures 4 to 7 shows various embodiments of gravity filter to be used in the said system according to the present invention.
Figure 8 shows a settler/floater system according to one embodiment of the present invention to be used in the system of the present invention;
Figure 9 a twin belt squeezer according to one embodiment of the present invention to be used in the system of the present invention;
Figures 10 to 14 show various embodiments of the pressure filters according to the present invention to be used in the system of the present invention.

### DETAILED DESCRIPTION OF THE INVENTION:

The present invention is described more fully hereinafter with reference to the accompanying drawings, in which exemplary embodiments of the present invention are shown. The present invention may, however, be embodied in many different forms and should not be construed as limited to the exemplary embodiments set forth herein. Rather, these embodiments are provided so that this disclosure will be thorough and complete, and will fully convey the scope of the present invention to those skilled in the art. In the drawings, the sizes and relative sizes of layers and regions may be exaggerated for clarity.

Spatially relative terms, such as "above" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures.

The terminology used herein is for the purpose of describing particular embodiments only and is not intended to be limiting of the present invention. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Exemplary embodiments of the present invention are described herein with reference to cross-section illustrations that are schematic illustrations of idealized embodiments (and intermediate structures) of the present invention. As such, variations from the shapes of the illustrations as a result, for example, of manufacturing techniques and/or tolerances, are to be expected. Thus, exemplary embodiments of the present invention should not be construed as limited to the particular shapes of regions illustrated herein but are to include deviations in shapes that result, for example, from manufacturing.

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

In general, the present invention provides a method and system for manufacturing clarified juice from sugarcane without using sulfitation process and with less heating. The method comprises step of steps of: washing sugarcane with water comprising biocide before passing through cutter and shredders for removing mud and reducing microbial population; spraying biocide on the cut and prepared sugarcane to reduce the microbial activity; adding biocide while milling of the sugarcane or in juice collectors to have control over the microbial growth; filtering the juice to remove floating/suspended matters; heating the filtered juice at 35-85 deg C; mixing one or more coagulating and flocculating agents for coagulation of suspended solids; and separating the coagulated solids to obtain clarified juice. This juice can be further treated to manufacture ethanol, juice for packaging having shelf life of about six months and sugar without using conventional sulfitation treatment.

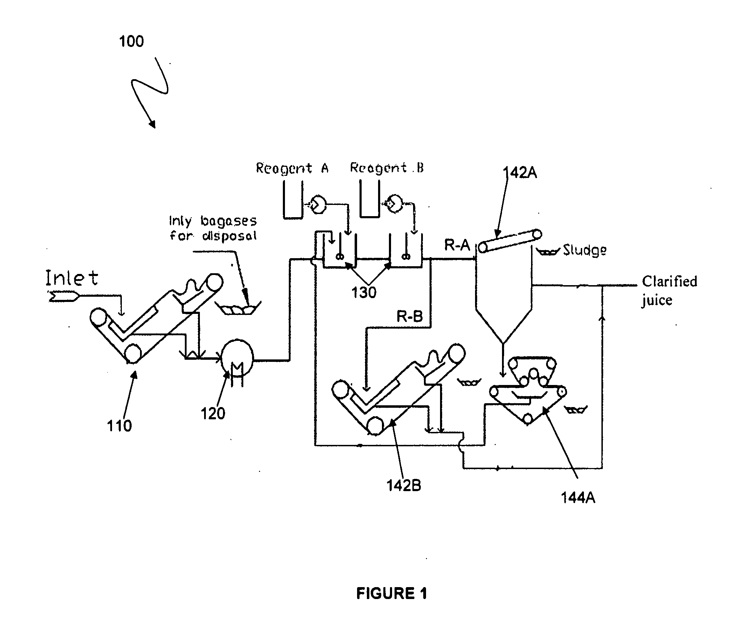

Referring Figure 1 which shows a system (100) for producing a clarified juice from sugarcane according to the present invention comprising: a washing means (not shown) for washing sugarcane with water and biocide for reducing microbial population; cutter and shredders (not shown) for cutting and shredding the sugarcane; a spraying means (not shown) for spraying biocides on cut and shredded sugarcane for reducing microbial activity; series of mills (not shown) for extraction of juice form sugarcane; a means for adding biocide (not shown) in the juice during milling or in juice collectors; a gravity filter (110) for filtering the juice; a heater (120) for heating the filtered juice at 35-85 deg C; a mixer (130) for mixing coagulating agent and flocculating agent in the heated juice; and a separating means (140) for separating coagulated matters to obtain clarified juice. The Figure 1 shows two alternative routes viz. Route A and Route B for passing the heated juice through the separating means (140) to obtain clarified juice. As shown in Figure 1, according to Rote A the separating means (140) involves a settler/floater system (142A) to obtain clarified juice and a filtering means (144A) for filtering settled mass of juice in order to re-circulate the filtrate. In Route B, the separating means (140) includes a gravity filter (142B) for obtaining clarified juice. Accordingly, a method for producing a clarified juice from sugarcane first comprises a step of washing sugarcane carried from farms with water comprising biocide before passing through cutter and shredders for removing mud and reducing microbial population. The biocide used in the water for washing the sugarcane is aqueous formulation of Formula I comprising single or a mixture of ammonium compound, gluteraldehyde or chlorine releasing compounds, hydrogen peroxide, peroxy acetic acid and water. The washing results in not only decrease in the microbial population but also moves the mud therefore decrease the load on the filters. The washed muddy water can be used for watering the farms.

In second step the washed sugarcane is then cut and shred by passing through the cutter and shredder in a known way and then biocide is sprayed on the cut and prepared sugarcane while moving over the belt to reduce the microbial activity, the biocide sprayed during cutting and shedding is aqueous formulation of Formula II comprising mixture of synergistically acting solutions of sodium and / or potassium salts of methyl,& / or dimethyl, & / or ethyl & / or cyanodiethyl dithiocarbamates 25 - 50% w/w preferably 40 ± 0.5% w/w; one or in combination of amine based, polymer based, phosphate based, phosphonate based, organosulfur based, quinine based chelating / sequestrating / penetrating compound 0.01 to 5 % w/w; and 0 to 10 parts of foaming or non - foaming type dispersant/chelating agent formulated to kill about 90% microbes in one minute.

In third step, the cut and shred sugarcane is then pass through the series of mills in a know way to extract juice from the sugarcane. According to the present invention biocide can be added while milling of the sugarcane or in juice collectors to have control over the microbial growth. The biocide added during milling or in the juice collector is aqueous formulation of Formula IIi comprising: a mixture of synergistically acting solutions of sodium and / or potassium salts of methyl,& / or dimethyl, & / or ethyl & / or cyanodiethyl dithiocarbamates 25 - 50% w/w preferably 40 ± 0.5% w/w, and 0 to 10 parts of foaming or non - foaming type dispersant/chelating agent formulated to kill about 90% microbes in ten minute.

Then the juice is filtered to remove floating/suspended matters and; heated to 35-85 deg C for mixing one or more coagulating and flocculating agents for coagulation of suspended solids. This heated juice after mixing with coagulating and flocculating agents is separated from the coagulated solids to obtain clarified juice. The clarified juice obtained has negligible microbes less than 500 cfu per ml. According to the present invention, the step of separating coagulated solids involves filtering of juice or passing of juice through a floater/settler system to obtain clarified juice and filtering of settled mass of juice in settling tank of the floater/settler system to re-circulate the filtrate.

According to the present invention, a system for producing ethanol from sugarcane comprises a system for producing clarified juice of figure 1 and a fermenter for fermenting the clarified juice. Accordingly, the method for producing ethanol comprises a step of fermenting the juice produced by above method with the help of ethanol or yeast like Saccharomyces spp.or conventionally known microorganisms.

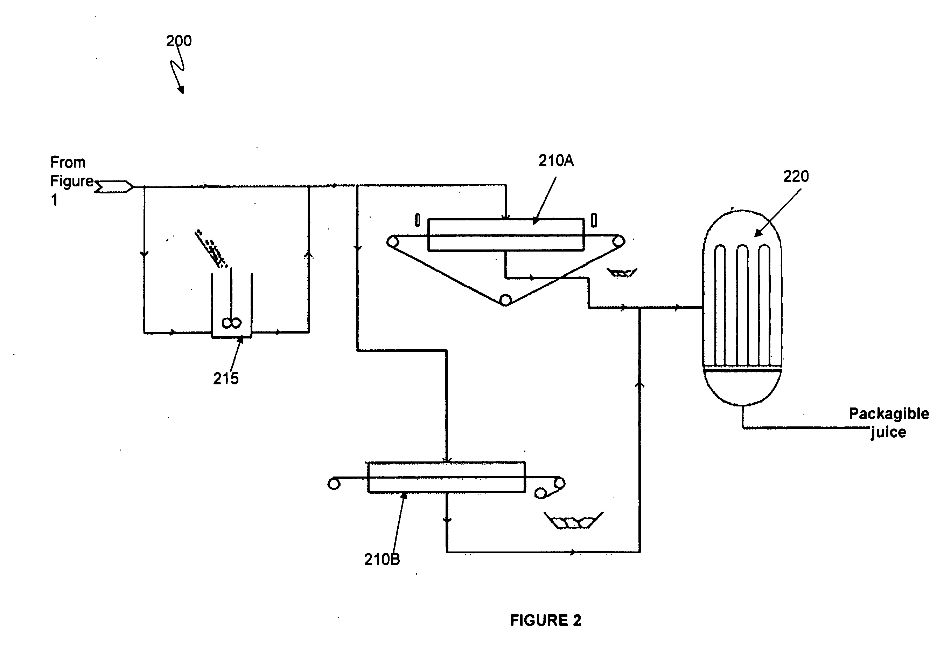

Referring Figure 2 shows a system (200) for producing ethanol. This system (200) includes all embodiments and routes of the system shown in Figure 1 along with other embodiments to produce juice for packaging. This system (200) includes a system (100) for producing a clarified juice of Figure 1, a filtering means and polishing filter (220). In alternative, the system may include a mixer (215) for addition of decolorizing and/or deodorizing agent before passing through filtering means (210). The filtering means (210) can be a gravity filter (210A) or a pressure filter (210B) for filtering the juice. The juice obtained from the polishing filter (220) comprises substantially zero microbes can be send for packaging for drinking purpose.

As shown in Figure 2 of system for manufacturing sugarcane juice for packaging, the method for manufacturing a juice for packaging comprises steps of: filtering of the clarified juice obtained and pasteurizing and packaging the juice. Accordirig to the present invention, filtering of juice includes pressure filtration or long filtration of the juice. The juice thus obtained comprises substantially zero microbes can be send for packaging for drinking purpose and has shelf life about six months from the date of manufacturing.

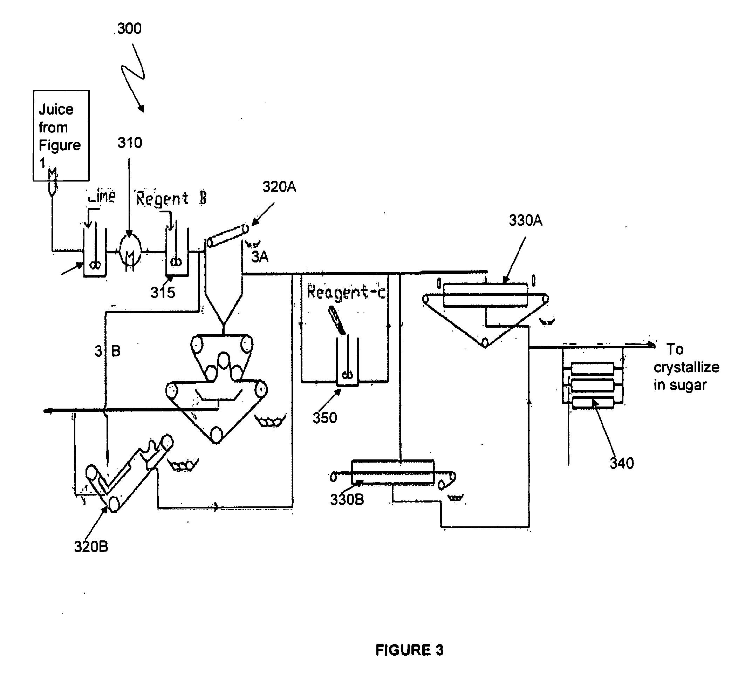

According to the present invention, the method of manufacturing a juice for packaging may comprise addition of decolorizing and/or deodorizing agent to the juice for removal of color matter before filtering the juice. The decolorizing and/or deodorizing agent can be activated carbon, powdered or granular charcoal. Referring Figure 3 shows a system (300) for manufacturing sugar from sugarcane includes all embodiments and routes of the system shown in Figure 1 along with other embodiments to treat the juice to manufacture sugar. Accordingly, the system (300) of manufacturing sugar from sugarcane includes a system (100) for producing a clarified juice of Figure 1; a mixer (305) for raising the ph of the clarified juice obtained from the system of Figure 1, a series of heater (310) for the heating juice at 80-100 deg C; a mixer (315) for mixing flocculating agents to flocculate proteins; a separating means (320) for separating the heated juice from flocculated proteins; a filtering means (330) for filtering the protein free juice; a concentrating means (340) for concentrating the juice; and a crystallizing means (not shown) for producing sugar.

In Figure 3 the separating means (320) of the system for producing sugar shown is a settler/floater system (320A) by route 3A or a gravity filter (320B) by route 3B.

In optional route (OR-1), the system for producing sugar comprises a mixer (350) for addition of decolorizing and/or deodorizing agent before the filtering means (330).

According to the present invention, the filtering means (330) of the system for producing sugar is pressure filter (330B).

According to one embodiment of the system for producing sugar from sugarcane, the concentrating means (340) and crystallizing means can be a series of mesquite boiling scheme. According to another embodiment of the system for producing sugar from sugarcane, the concentrating means (340) is a reverse osmosis system or multiple effect evaporator system or evaporation system and the crystallizing means (not shown) is a series of pan boiling scheme to produce sugar.

Accordingly, a method for manufacturing sugar from the sugarcane comprises step of: adding lime in the clarified juice or the packagible juice to the raise the pH of the juice in the range of 6-9 heating the juice to flocculate proteins. Then the juice is passed through the separating means and filter means to separate floating matters and flocculated proteins. The clean juice obtained from the filtering means is then concentrated and crystallized to obtain sugar.

In an alternative, the method for manufacturing sugar from the sugarcane, the method may comprises a step of adding decolorizing and/or deodorizing agent in the juice obtained from the separating means; filtering the juice to obtain clear juice; passing the clear juice through the reverse-osmosis system to obtain concentrated juice; and thereafter crystallizing the juice into mesquite to obtain sugar.

According to the one embodiment of the invention, the step of separating juice from flocculated proteins involves passing of juice through gravity filter or twin belt filter. Alternatively, the separating involves passing of juice through a floater/settler system to obtain clarified juice and filtering of settled mass of juice in the settling tank to re-circulate the filtrate.

According to the one embodiment of the manufacturing sugar, filtering of the juice to obtain clear juice includes pressure filtration of the juice.

According to one embodiment of method for manufacturing sugar from the sugarcane, flocculating agents can be added for agglomeration of proteins flocculated.

The present invention also provides a settler/floater system, a gravity filter, and a pressure filter to be used for above systems and methods.

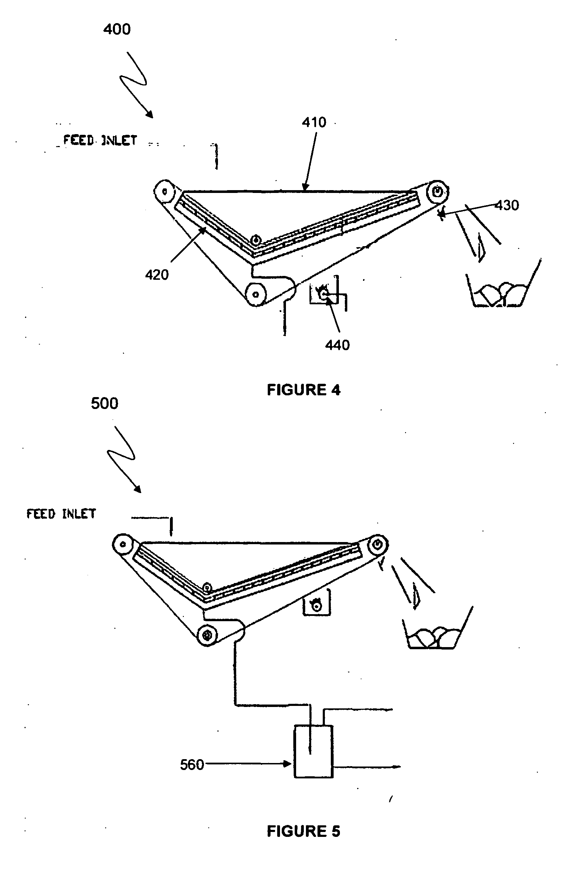

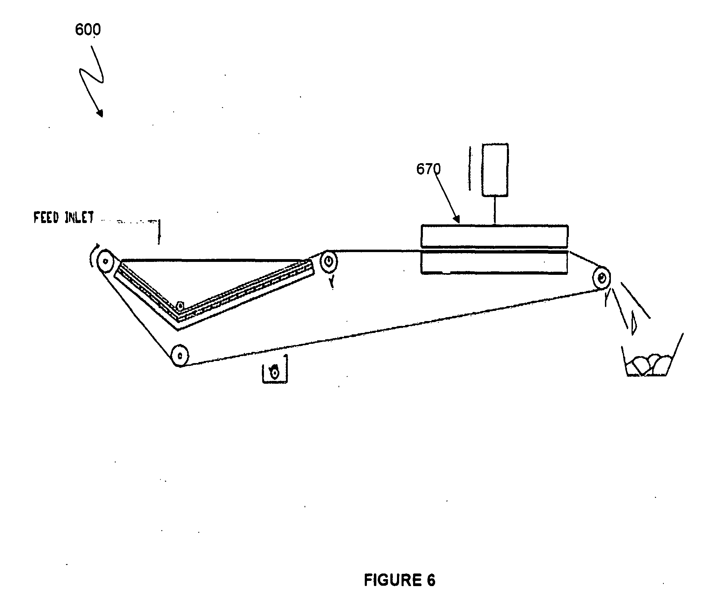

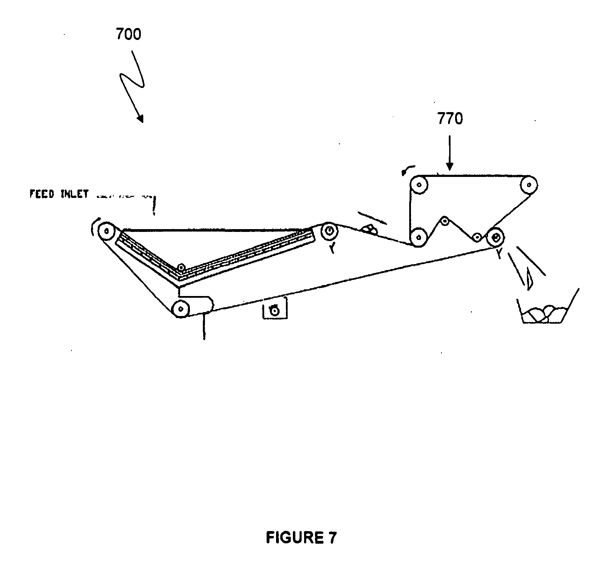

The gravity filters (400, 500, 600, 700) according to the present invention are shown through Figure 4 to 7. The gravity filter (400, 500, 600, 700) comprises an endless filter cloth (410) rotating continuously or intermittently between atleast two rollers for filtration of juice, a feed bowl (420) to cause the belt to take shape of bowl, a scrapper (430) to remove solids deposited on the belt, a washing mean (440) to wash the belt before entering into bowl and a filtrate collecting tray (450) for collecting filtered juice. Referring to Figure 5 wherein the gravity filter (500) comprises a vacuum means (560) arranged below the belt to increase speed of filtering. In Figure 6 and 7, the gravity filter (600, 700) comprise a squeezing means such as a plate squeezing means (670) and belt squeezing means (770) before the scrapper to squeeze solids deposited on the filter cloth.

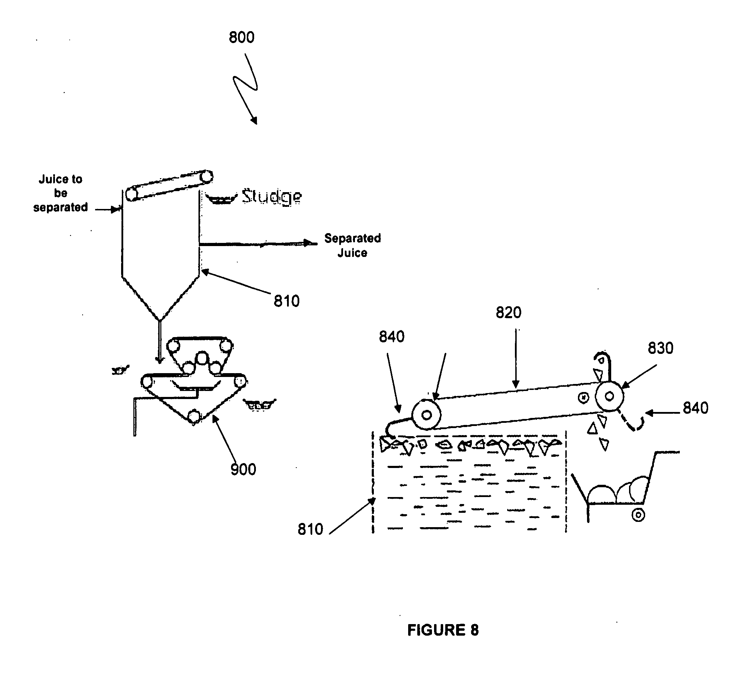

Referring to Fig 8 shows the settler/floater system (800) according to the present invention. The settler/floater system (800) comprises a settling tank (810) for settling of the juice; an inclined endless belt (820) rotating between atleast two rollers (830) arranged at the top of the settling tank having a plurality of curve blades (840) adapted on the belt to collect the floating materials from the top of the liquid in the settling tank and to drop them at a predetermined point. A twin belt squeezer (900) is arranged below the settling tank for squeezing the slurry leaving the bottom of the settling tank to separate the solids from filtrate and re-circulating the filtrate and an outlet for removing clarified juice to obtain maximum recovery. According to the present invention, the settling tank can be a Dorr Settling tank. The curved blades (830) can be permeable or perforated blades for collecting floating matter from the top of the juice and allowing passage of juice through the blades.

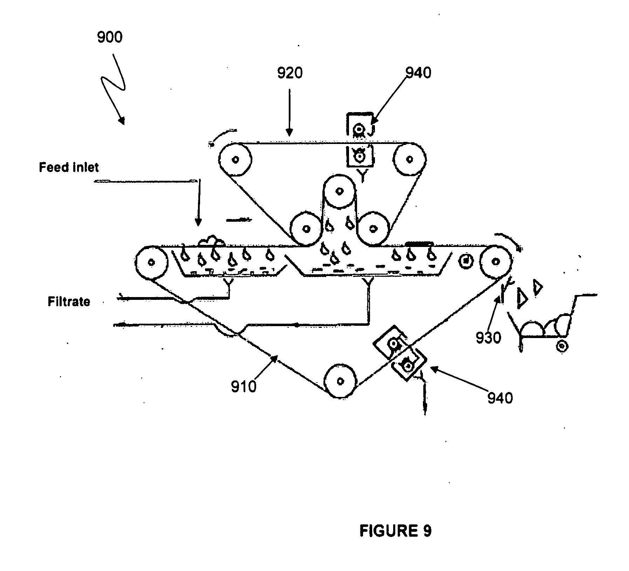

Referring to Figure 9 shows the twin belt squeezer (900) comprises atleast two endless belts (910, 920) made of filter cloth and arranged one above another rotating in opposite directions having some portion in contact with each other to cause the slurry filtration between the cloths initially under gravity and by squeezing and shearing of the solids between the belts, a scrapper (930) for at least one belt to remove the solids deposited on the belt and a washing means (940) for each belt for washing the scrapped belt. The endless belt (910, 920) rotates at least between the two rollers and preferably more than two rollers to rotate the belts generally in serpentine manner.

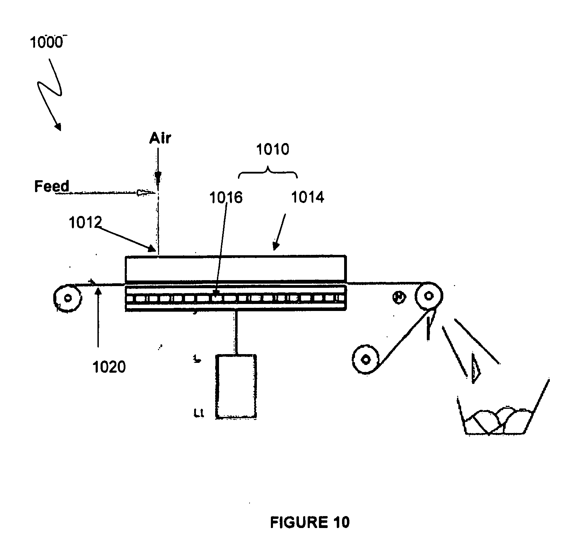

Figs 10 to 14 show various embodiments of the pressure filter (1000, 1100, 1200, 1400) according to the present invention.

According to the present invention, in general the pressure belt filter (1000, 1100, 1200, 1400) comprises: a closed filtration chamber (1010) having an inlet (1012) for feeding the juice to be filtered, a filter cloth (1020) dividing the filtration chamber (1010) into a feed chamber (1014) and a filtrate chamber (1016); a perforated support for supporting the filter cloth (not shown), and a pump (not shown) for supplying the juice at a high pressure. A vacuum means (not shown) can be . connected to the filtrate chamber to increase the speed of the filtration.

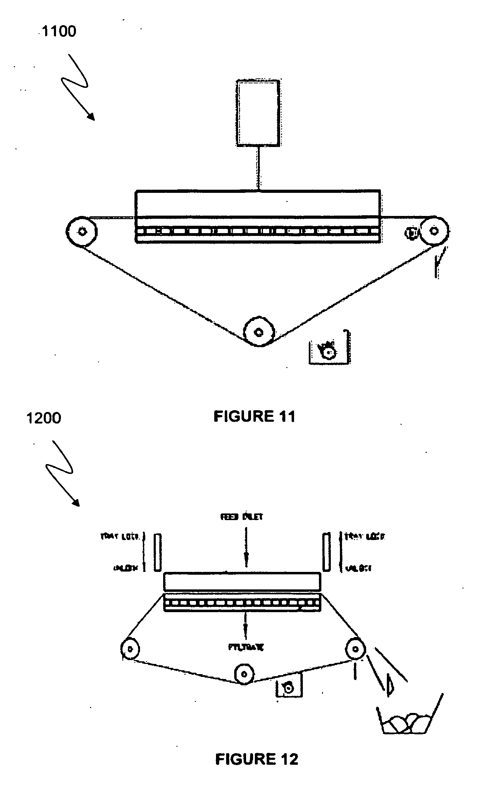

As shown in Figure 12, the feed chamber (1214) and the filtrate chamber (1216) can be separate chambers and comprise a locking means (not shown)) for locking and unlocking the chambers to form a closed chamber.

Figures 11-14 shows the filter cloth (1120, 1220, 1320) of belt system of the pressure filter (1100, 1200, 1400) can be arranged in an endless belt form rotating between atleast three rollers.

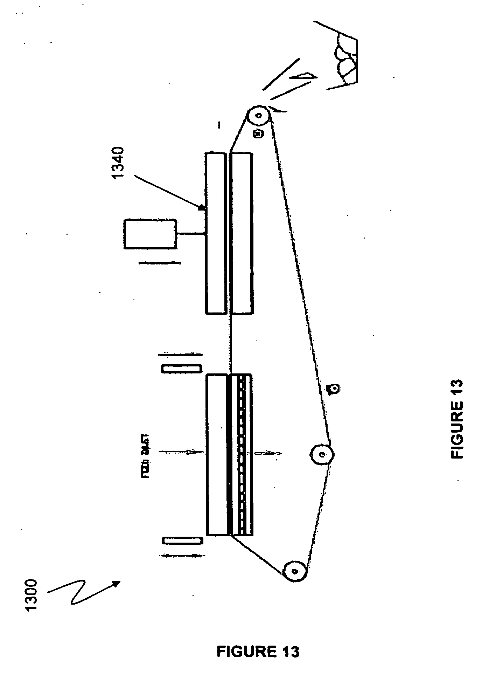

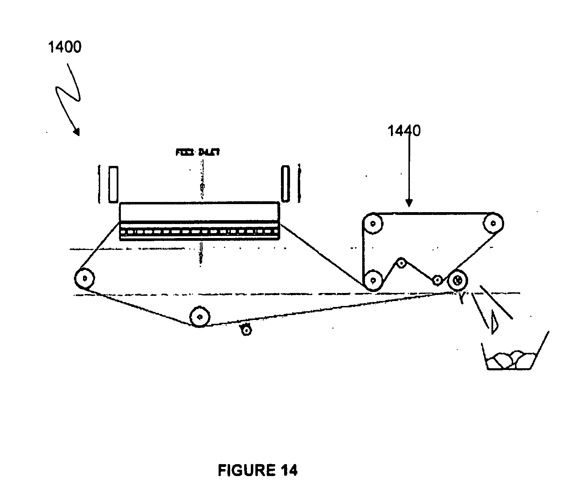

An alternative embodiment shown in Figures 13 and 14 comprises a pressure filter having a squeezing means for squeezing solids deposited on the filter cloth. The squeezing means can be a pressure plate squeezing means (1340) as shown in Figure 13 or a belt squeezing means (1440) as shown in Figure 14 for squeezing the solids or both.

The filter cloth according to the present invention may be woven / non-woven polyester, HDPE, polyamide or alike having pour size of 50 to 750 micron.

The present invention has made possible to pack the sugar-juice. The sugar obtained by this invention is refined sugar. The sugar produced have color less than 45 IU, conductivity ash below 0.15% and will have very low impurities like dextran, calcium, microorganism suspended particles etc and thus will satisfy the quality requirements of EU I and / or EU II grade sugar. Further, sugar obtained by the present invention contains substantially zero sulfur as the said method and system does not contain conventionally sulfitation treatment.

## Claims

1. A method for producing clarified juice from sugarcane comprising steps of:
washing sugarcane with water having biocide wherein the biocide is aqueous formulation of Formula I comprising alone or a mixture of compound selected from a group of ammonium compound, gluteraldehyde or chlorine releasing compounds, hydrogen peroxide, and peroxy acetic acid;
passing washed sugarcane through cutter and shredders for removing mud and reducing microbial population;
spraying biocide on the cut and prepared sugarcane to reduce the microbial activity wherein the biocide is aqueous formulation of Formula II comprising mixture of synergistically acting solutions of sodium and / or potassium salts of methyl,& / or dimethyl, & / or ethyl & / or cyanodiethyl dithiocarbamates 25 - 50% w/w preferably 40 ± 0.5% w/w; one or in combination of amine based, polymer based, phosphate based, phosphonate based, organosulfur based, quinine based chelating / sequestrating / penetrating compound 0.01 to 5 % w/w; and 0 to 10 parts of foaming or non - foaming type dispersant/chelating agent formulated to kill about 90% microbes in one minute;
cutting and shedding the sugarcane;
adding biocide while milling of the sugarcane or in juice collectors to have control over the microbial growth wherein the biocide added during milling or in the juice collector is aqueous formulation of Formula III comprising: a mixture of synergistically acting solutions of sodium and / or potassium salts of methyl,& / or dimethyl, & / or ethyl & / or cyanodiethyl dithiocarbamates 25 - 50% w/w preferably 40 ± 0.5% w/w, and 0 to 10 parts of foaming or non - foaming type dispersant/chelating agent formulated to kill about 90% microbes in ten minute;
filtering the juice to remove floating/suspended matters;
heating the filtered juice at 35-85 deg C;
mixing one or more coagulating and flocculating agents for coagulation of suspended solids; and separating the coagulated solids to obtain clarified juice having negligible microbes less than 500 cfu per ml.

2. The method for producing clarified juice from sugarcane as claimed in claim 1, wherein the step of separating coagulated solids involves filtering of juice or passing the juice through a floater/settler system to obtain clarified juice and filtering of settled mass of juice in settling tank of the floater/settler system to re-circulate the filtrate and/or the coagulating agent is selected from a group of alumina compounds, alum, poly-aluminum chloride or in combination thereof and/or
the flocculating agent is selected from a group of poly-electrolyte, polymers or co-polymers of acryl amide acrylic acid malic acid or the like and in combination thereof.

3. A method for producing ethanol comprising steps of:
fermenting the clarified juice obtained from the method as claimed in claim 1 by adding fermenting agents such as ethanol, yeast.

4. A method for manufacturing juice for packaging comprises steps of:
filtering of clarified juice obtained from the method for producing clarified juice from sugarcane as claimed in claim 1; and
pasteurizing and packaging the juice
wherein the juice has shelf life about six month as the microbial activity is substantially equal to zero.

5. The method for manufacturing juice for packaging as claimed in claim 4, filtering of juice includes pressure filtration or long filtration of the juice and/or decolorizing and/or deodorizing agent including activated carbon, powdered or granular charcoal can be added to the juice for removal of color matter before filtering the juice.

6. A method for manufacturing sugar from the sugarcane comprises steps of:
adding lime in the clarified juice obtained from the method as claimed in claim 1 or 4 to raise the pH of the juice in the range of 6-9;
heating the juice to flocculate proteins;
mixing reagents to flocculate proteins and optionally adding flocculating agents for agglomeration of proteins flocculated;
separating the juice from flocculated proteins;
concentrating protein-free juice through settler floater to remove suspended and floating matters; and
crystallizing the juice to obtain sugar
and optionally comprises steps of
adding decolorizing and/or deodorizing agent in the juice separated;
filtering the juice to obtain clear juice;
passing the clear juice through the reverse-osmosis system or thru multiple effect evaporation system to obtain concentrated juice before crystallizing the juice into mesquite to obtain sugar.

7. A system for producing a clarified juice from sugarcane comprising:
a washing means for washing sugarcane with water and biocide for reducing microbial population;
a spraying means for spraying biocides solution on prepared cane before entry to cutter and / or shredder for reducing microbial activity; cutter and shredders for cutting and shredding the sugarcane;
a series of mills for extraction of juice form sugarcane;
a means for adding biocide in the juice during milling or in juice collectors of the mills;
a gravity filter for filtering the juice;
a heater for heating the filtered juice at 35-85 deg C;
a mixer for mixing coagulating agent and flocculating agent in the heated juice; and
a separating means including a gravity filter or a settler floater system and a filtering means for separating coagulated matters to obtain clarified juice wherein said clarified juice negligible microbes less than 500 cfu per ml.

8. A system for producing juice for packaging comprising:
a system for producing a clarified juice as claimed in claim 7;
a filter for filtering the clarified juice; and
pasteurizing and packaging means for the filtered juice and optionally comprises:
a mixer for addition of decolorizing and/or deodorizing agent; and
a pressure filter for filtering the juice before passing the juice through polishing filter.

9. A system for producing sugar from sugarcane comprising:
a system for producing a clarified juice as claimed in claim 7;
a series of heater for the heating juice at 80-100 deg C;
a separating means for separating the heated juice including a settler/floater system or a gravity filter from flocculated proteins; a filtering means for filtering the protein free juice;
a concentrating means for concentrating the juice; and
a crystallizing means for producing sugar.

10. The system for producing sugar from sugarcane as claimed in claim 9, wherein the filtering means of the system for producing sugar is pressure filter and/or
the concentrating means is a reverse osmosis system or multiple effect evaporator system or evaporation system and the crystallizing means is a series of pan boiling scheme to produce sugar.

11. A system for producing ethanol from sugarcane comprising:
a system for producing a clarified juice as claimed in claim 7; and
a fermenting device.

12. The system for producing a clarified juice from sugarcane as claimed in claim 7, wherein the settler/floater system comprises a settling tank for settling of the juice; an inclined endless belt rotating between atleast two rollers arranged at the top of the settling tank having a plurality of curve blades adapted on the belt to collect the floating materials from the top of the liquid in the settling tank and to drop them at a predetermined point; a twin belt squeezer for squeezing the slurry leaving the bottom of the settling tank to separate the solids from filtrate and re-circulating the filtrate and an outlet for removing clarified juice.

13. The system for producing a clarified juice from sugarcane as claimed in claim 12, wherein the curved blades are permeable or perforated blades for collecting floating matter from the top of the juice and allowing passage of juice through the blades and/or
the twin belt squeezer comprises atleast two endless belts made of filter cloth and arranged one above another rotating in opposite directions to cause the slurry filtration between the cloths initially under gravity and further by squeezing and shearing of the solids between the belts, a scrapper for at least one belt to remove the solids deposited on the belt and a washing means for each belt for washing the scrapped belt.

14. The system for producing a clarified juice from sugarcane as claimed in claim 7, wherein the gravity filter comprises an endless filter cloth rotating continuously or intermittently between atleast two rollers for filtration of juice, a feed bowl to cause the belt to take shape of bowl, a scrapper to remove solids deposited on the belt, a washing mean to wash the belt before entering into bowl and a filtrate collecting tray for collecting filtered juice
wherein the gravity filter optionally comprise a squeezing means such as a belt squeezing/ plate squeezing means before the scrapper to squeeze solids deposited on the filter cloth.

15. The system for producing a packaging juice from sugarcane as claimed in claim 8, wherein the pressure belt filter comprises: a closed filtration chamber having an inlet for feeding the juice to be filtered, a filter cloth dividing the filtration chamber into feed chamber and filtrate chamber; a perforated support for supporting the filter cloth, a squeezing means for squeezing solids deposited on the filter cloth and a pump for supplying the juice at a high pressure.

16. The system for producing a packaging juice from sugarcane as claimed in claim 15, wherein the closed chamber optionally comprise a feed chamber and a filtrate chamber separable from each other and a locking means for locking and unlocking the chambers and/or
the squeezing means optionally comprises a means to supply air at high pressure or a belt squeezing means for squeezing the solids or both.

17. The system for producing a packaging juice from sugarcane as claimed in claim 15, the filter cloth can be arranged in an endless belt form rotating between at least two rollers and preferably between more than two rollers intermittently.

## Patentansprüche

1. Verfahren zum Herstellen von geklärtem Saft aus Zuckerrohr, umfassend die folgenden Schritte:
Waschen von Zuckerrohr mit Wasser, das ein Biozid enthält, wobei das Biozid eine wässrige Formulierung der Formel I ist, umfassend allein oder im Gemisch eine Verbindung, ausgewählt aus der Gruppe von einer Ammoniumverbindung, Glutaraldehyd- oder Chlor-freisetzenden Verbindungen, Wasserstoffperoxid und Peroxyessigsäure;
Führen des gewaschenen Zuckerrohrs durch Schneider und Häcksler zum Entfernen von Schlamm und Verringern der mikrobiellen Population;
Sprühen von Biozid auf das geschnittene und vorbereitete Zuckerrohr, um die mikrobielle Aktivität zu verringern, wobei das Biozid eine wässrige Formulierung der Formel II ist, umfassend ein Gemisch von synergistisch wirkenden Lösungen von Natrium- und/oder Kaliumsalzen von Methyl-und/oder Dimethyl- und/oder Ethyl- und/oder Cyanodiethyldithiocarbamaten, 25-50 Gew.-%, vorzugsweise 40 ± 0,5 Gew.-%, eine oder in Kombination einer aminbasierten, polymerbasierten, phosphatbasierten, phosphonatbasierten, organoschwefelbasierten, chininbasierten chelatbildenden/sequestrierenden/penetrierenden Verbindung, 0,01 bis 5 Gew.-%, und 0 bis 10 Teile eines Dispergierungs-/Chelatbildungsmittels vom schäumenden oder nichtschäumenden Typ, formuliert, um etwa 90 % Mikroben in einer Minute abzutöten;
Schneiden und Häckseln des Zuckerrohrs;
Zugeben von Biozid während das Zuckerrohr gemahlen wird oder in Saftsammlern, um Kontrolle über das mikrobielle Wachstum zu haben, wobei das während des Mahlens oder in dem Saftsammler zugegebene Biozid eine wässrige Formulierung der Formel III ist, umfassend: ein Gemisch von synergistisch wirkenden Lösungen von Natrium- und/oder Kaliumsalzen von Methyl- und/oder Dimethyl-und/oder Ethyl- und/oder Cyanodiethyldithiocarbamaten, 25-50 Gew.-%, vorzugsweise 40 ± 0,5 Gew.-%, und 0 bis 10 Teile eines Dispergierungs-/Chelatbildungsmittels vom schäumenden oder nichtschäumenden Typ, formuliert, um etwa 90 % Mikroben in zehn Minuten abzutöten;
Filtrieren des Safts, um schwimmendes/suspendiertes Material zu entfernen;
Erhitzen des filtrierten Safts auf 35-85 °C;
Mischen von einem oder mehreren Koagulations- und Flockungsmitteln zum Koagulieren von suspendierten Feststoffen; und Abtrennen der koagulierten Feststoffe, um geklärten Saft zu erhalten, der vernachlässigbare Mikroben von weniger als 500 cfu pro ml enthält.

2. Verfahren zum Herstellen von geklärtem Saft aus Zuckerrohr gemäß Anspruch 1, wobei der Schritt des Abtrennens von koagulierten Feststoffen das Filtrieren von Saft oder Führen des Safts durch ein Floater/Settler-System, um geklärten Saft zu erhalten, und Filtrieren der abgesetzten Masse von dem Saft in einem Absetztank des Floater/Settler-Systems, um das Filtrat zu rezirkulieren, umfasst, und/oder das Koagulationsmittel ausgewählt ist aus der Gruppe von Aluminiumoxid-Verbindungen, Alum, Polyaluminiumchlorid und Kombinationen davon und/oder
das Flockungsmittel ausgewählt ist aus der Gruppe von Polyelektrolyten, Polymeren oder Copolymeren von Acrylamid, Acrylsäure, Apfelsäure und dergleichen und Kombinationen davon.

3. Verfahren zum Herstellen von Ethanol, umfassend die folgenden Schritte:
Fermentieren des geklärten Safts, erhalten aus dem Verfahren gemäß Anspruch 1, durch Zugeben von Fermentationsmitteln, wie z. B. Ethanol, Hefe.

4. Verfahren zum Herstellen von Saft zum Verpacken, umfassend die folgenden Schritte:
Filtrieren von geklärtem Saft, erhalten aus dem Verfahren zum Herstellen von geklärtem Saft aus Zuckerrohr gemäß Anspruch 1; und
Pasteurisieren und Verpacken des Safts,
wobei der Saft eine Haltbarkeitsdauer von etwa sechs Monaten aufweist, da die mikrobielle Aktivität im Wesentlichen gleich null ist.

5. Verfahren zum Herstellen von Saft zum Verpacken gemäß Anspruch 4, wobei das Filtrieren des Safts Druckfiltration oder Langfiltration des Safts umfasst und/oder Entfärbungs- und/oder Desodorierungsmittel, einschließlich Aktivkohle, pulverförmige oder granulatförmige Holzkohle zum Entfernen von Farbmaterial vor dem Filtrieren des Safts zu dem Saft zugegeben werden kann.

6. Verfahren zum Herstellen von Zucker aus Zuckerrohr, umfassend die folgenden Schritte:
Zugeben von Kalk zu dem geklärten Saft, erhalten aus dem Verfahren gemäß Anspruch 1 oder 4, um den pH-Wert des Safts in den Bereich von 6-9 zu erhöhen;
Erhitzen des Safts, um Proteine auszuflocken;
Beimischen von Reagenzien zum Ausflocken von Proteinen und gegebenenfalls Zugeben von Flockungsmitteln für die Agglomeration der ausgeflockten Proteine;
Abtrennen des Safts von ausgeflockten Proteinen;
Konzentrieren des proteinfreien Safts durch einen Settler/Floater, um suspendiertes und schwimmendes Material zu entfernen; und
Kristallisieren des Safts, um Zucker zu erhalten,
und gegebenenfalls umfassend die folgenden Schritte:
Zugeben von Entfärbungs- und/oder Desodorierungsmittel zu dem abgetrennten Saft;
Filtrieren des Safts, um klaren Saft zu erhalten;
Führen des klaren Safts durch ein Umkehrosmosesystem oder durch ein Mehrfachwirkungs-Abdampfsystem, um konzentrierten Saft zu erhalten, bevor der Saft in Mesquite kristallisiert wird, um Zucker zu erhalten.

7. System zum Herstellen eines geklärten Safts aus Zuckerrohr, umfassend:
ein Mittel zum Waschen, um Zuckerrohr mit Wasser und Biozid zum Verringern der mikrobiellen Population zu waschen;
ein Sprühmittel zum Sprühen von Biozidlösung auf vorbereitetes Zuckerrohr, bevor es in einen Schneider und/oder Häcksler eintritt, zum Verringern der mikrobiellen Aktivität;
Schneider und Häcksler zum Schneiden und Häckseln des Zuckerrohrs;
eine Reihe von Mühlen für die Extraktion von Saft aus Zuckerrohr;
ein Mittel zum Zugeben von Biozid zu dem Saft während des Mahlens oder in Saftsammlern der Mühlen;
einen Schwerkraftfilter zum Filtrieren des Safts;
einen Erhitzer zum Erhitzen des filtrierten Safts auf 35-85 °C;
einen Mischer zum Mischen von Koagulationsmittel und Flockungsmittel zu dem erhitzen Saft; und
ein Trennmittel, einschließlich eines Schwerkraftfilters oder eines Settler/Floater-Systems, und ein Filtermittel zum Abtrennen von koaguliertem Material, um geklärten Saft zu erhalten, wobei der geklärte Saft vernachlässigbare Mikroben von weniger als 500 cfu pro ml enthält.

8. System zum Herstellen von Saft zum Verpacken, umfassend:
ein System zum Herstellen eines geklärten Safts gemäß Anspruch 7;
einen Filter zum Filtrieren des geklärten Safts; und
Pasteurisierungs- und Verpackungsmittel für den filtrierten Saft, und gegebenenfalls umfassend:
einen Mischer zum Zugeben von Entfärbungs-und/oder Desodorierungsmittel; und
einen Druckfilter zum Filtrieren des Safts vor dem Führen des Safts durch einen Feinfilter.

9. System zum Herstellen von Zucker aus Zuckerrohr, umfassend:
ein System zum Herstellen eines geklärten Safts gemäß Anspruch 7;
eine Reihe von Erhitzern zum Erhitzen von Saft auf 80-100 °C;
ein Trennmittel zum Abtrennen des erhitzten Safts, umfassend ein Settler/Floater-System oder einen Schwerkraftfilter für ausgeflockte Proteine; ein Filtriermittel zum Filtrieren des proteinfreien Safts;
ein Konzentrationsmittel zum Konzentrieren des Safts; und
ein Kristallisationsmittel zum Herstellen von Zucker.

10. System zum Herstellen von Zucker aus Zuckerrohr gemäß Anspruch 9,
wobei das Filtermittel des Systems zum Herstellen von Zucker ein Druckfilter ist und/oder
das Konzentrationsmittel ein Umkehrosmosesystem oder Mehrfachwirkungs-Abdampfsystem oder Abdampfsystem ist und das Kristallisationsmittel ein Reihe-von-Wannen-Siedesystem ist, um Zucker herzustellen.

11. System zum Herstellen von Ethanol aus Zuckerrohr, umfassend:
ein System zum Herstellen eines geklärten Safts gemäß Anspruch 7; und
eine Fermentationsvorrichtung.

12. System zum Herstellen eines geklärten Safts aus Zuckerrohr gemäß Anspruch 7, wobei das Settler/Floater-System einen Absetztank zum Absetzen des Safts; ein ansteigendes endloses Band, das sich zwischen wenigstens zwei Rollen dreht, angeordnet an der Oberseite des Absetztanks, mit einer Vielzahl von auf dem Band angeordneten gekrümmten Schaufeln zum Sammeln des schwimmenden Materials von der Oberseite der Flüssigkeit in dem Absetztank und zum Fallenlassen davon bei einem vorbestimmten Punkt; eine Doppelbandpresse zum Pressen des Schlamms, der den Boden des Absetztanks verlässt, um die Feststoffe von dem Filtrat abzutrennen und das Filtrat zu rezirkulieren, und einen Auslass zum Entnehmen von geklärtem Saft umfasst.

13. System zum Herstellen eines geklärten Safts aus Zuckerrohr gemäß Anspruch 12, wobei die gekrümmten Schaufeln durchlässige oder perforierte Schaufeln zum Sammeln von schwimmendem Material von der Oberseite des Safts sind und zum Durchtretenlassen von Saft durch die Schaufeln und/oder
die Doppelbandpresse wenigstens zwei endlose Bänder, die aus Filtertuch hergestellt sind, übereinander angeordnet sind und sich in entgegengesetzte Richtungen drehen, um Filtration des Schlamms zwischen den Tüchern zu bewirken, anfangs unter Schwerkraft und dann durch Pressen und Scheren der Feststoffe zwischen den Bändern, einen Kratzer für wenigstens ein Band zum Entfernen der auf dem Band abgelagerten Feststoffe und ein Mittel zum Waschen für jedes Band, um das abgekratzte Band zu waschen, umfasst.

14. System zum Herstellen eines geklärten Safts aus Zuckerrohr gemäß Anspruch 7, wobei der Schwerkraftfilter ein endloses Filtertuch, das sich kontinuierlich oder intermittierend zwischen wenigstens zwei Rollen dreht, für die Filtration von Saft, ein Zufuhrbecken, um zu bewirken, dass das Band die Form eines Beckens annimmt, einen Kratzer, um auf dem Band abgelagerte Feststoffe zu entfernen, ein Mittel zum Waschen, um das Band zu waschen, bevor es in das Becken eintritt, und eine Filtratsammelwanne zum Sammeln von filtriertem Saft umfasst,
wobei der Schwerkraftfilter gegebenenfalls ein Pressmittel, wie z. B. ein Bandpress-/Plattenpressmittel, vor dem Kratzer umfasst, um auf dem Filtertuch abgelagerte Feststoffe zu pressen.

15. System zum Herstellen eines Safts zum Verpacken aus Zuckerrohr gemäß Anspruch 8, wobei der Druckbandfilter Folgendes umfasst: eine geschlossene Filtrationskammer mit einem Einlass zum Zuführen des zu filtrierenden Safts, ein Filtertuch, das die Filtrationskammer in eine Zufuhrkammer und eine Filtratkammer trennt; einen perforierten Träger zum Tragen des Filtertuchs, ein Pressmittel zum Pressen von auf dem Filtertuch abgelagerten Feststoffen und eine Pumpe zum Zuführen des Safts mit hohem Druck.

16. System zum Herstellen eines Safts zum Verpacken aus Zuckerrohr gemäß Anspruch 15, wobei die geschlossene Kammer gegebenenfalls eine Zufuhrkammer und eine Filtratkammer umfasst, die voneinander trennbar sind, und ein Sperrmittel zum Sperren und Entsperren der Kammern und/oder
das Pressmittel gegebenenfalls ein Mittel zum Zuführen von Luft mit hohem Druck oder ein Bandpressmittel zum Pressen der Feststoffe oder beides umfasst.

17. System zum Herstellen eines Safts zum Verpacken aus Zuckerrohr gemäß Anspruch 15, wobei das Filtertuch in der Form eines endlosen Bands, das sich zwischen wenigstens zwei Rollen dreht, vorzugsweise intermittierend zwischen mehr als zwei Rollen angeordnet sein kann.

## Revendications

1. Méthode de production de jus clarifié à partir de canne à sucre, comprenant les étapes consistant à :
laver la canne à sucre par de l'eau contenant un biocide, où le biocide est une formulation aqueuse de Formule I comprenant un seul composé ou un mélange de composés choisis dans le groupe constitué par un composé à base d'ammonium, le glutaraldéhyde, ou des composés libérant du chlore, le peroxyde d'hydrogène, et l'acide peracétique ;
faire passer la canne à sucre lavée dans des découpeuses et broyeuses afin d'éliminer les boues et réduire la population microbienne ;
pulvériser le biocide sur la canne à sucre découpée et préparée afin de réduire l'activité microbienne, où le biocide est une formulation aqueuse de Formule II comprenant un mélange de solutions à action synergique de sels de sodium et/ou potassium de dithiocarbamates de méthyle et/ou diméthyle et/ou éthyle et/ou cyanodiéthyle de 25-50% p/p, préférablement 40 ± 0,5% p/p ; seul ou en combinaison avec un composé chélateur/séquestrant/de pénétration à base d'amine, à base de polymère, à base de phosphate, à base de phosphonate, à base de soufre organique, à base de quinine, de 0,01 à 5% p/p ; et de 0 à 10 parties d'agent de dispersion/chélateur de type moussant ou non moussant formulé pour tuer environ 90% des microbes en une minute ;
découper et broyer la canne à sucre ;
aj outer le biocide tout en broyant la canne à sucre ou dans les collecteurs de jus afin de contrôler la croissance microbienne, où le biocide ajouté lors du broyage ou dans le collecteur de jus est une formulation aqueuse de Formule III comprenant : un mélange de solutions à action synergique de sels de sodium et/ou potassium de dithiocarbamates de méthyle et/ou diméthyle et/ou éthyle et/ou cyanodiéthyle de 25-50% p/p, préférablement 40 ± 0,5% p/p ; et de 0 à 10 parties d'agent de dispersion/chélateur de type moussant ou non moussant formulé pour tuer environ 90% des microbes en dix minutes ;
filtrer le jus pour éliminer les matières flottantes/en suspension ;
chauffer le jus filtré à 35-85°C ;
mélanger un ou plusieurs agents de coagulation et de floculation pour la coagulation des matières solides en suspension ; et séparer les matières solides coagulées afin d'obtenir un jus clarifié ayant une quantité négligeable en microbes, inférieure à 500 ufc par ml.

2. Méthode de production de jus clarifié à partir de canne à sucre selon la revendication 1, dans laquelle l'étape consistant à séparer les matières solides coagulées met en jeu une filtration du jus ou le passage du jus dans un système de flotteur/décanteur afin d'obtenir du jus clarifié et la filtration de la masse décantée de jus dans une cuve de décantation du système de flotteur/décanteur afin de faire recirculer le filtrat et/ou l'agent de coagulation est choisi dans le groupe constitué par les composés à base d'alumine, l'alun, le polychlorure d'aluminium ou une combinaison de ceux-ci et/ou
l'agent de floculation est choisi dans le groupe constitué par les poly-électrolytes, les polymères ou les copolymères d'acrylamide, d'acide acrylique, d'acide malique, ou similaires, et des combinaisons de ceux-ci.

3. Méthode de production d'éthanol, comprenant l'étape consistant à :
fermenter le jus clarifié obtenu à partir de la méthode selon la revendication 1 par l'addition d'agents de fermentation tels que l'éthanol et la levure.

4. Méthode de production de jus pour conditionnement, comprenant les étapes consistant à :
filtrer le jus clarifié obtenu à partir de la méthode de production de jus clarifié à partir de canne à sucre selon la revendication 1 ; et
pasteuriser et conditionner le jus ;
où le jus possède une durée de conservation d'environ six mois, l'activité microbienne étant sensiblement égale à zéro.

5. Méthode de production de jus pour conditionnement selon la revendication 4, la filtration du jus comportant une filtration sous pression ou une filtration longue du jus et/ou un agent de décoloration et/ou de désodorisation comportant du charbon actif, du charbon en poudre ou granulé, pouvant être ajouté au jus pour l'élimination des matières colorantes avant la filtration du jus.

6. Méthode de production de sucre à partir de canne à sucre, comprenant les étapes consistant à :
ajouter de la chaux au jus clarifié obtenu à partir de la méthode selon la revendication 1 ou 4 afin d'augmenter le pH du jus jusque dans la plage de 6-9 ;
chauffer le jus pour floculer les protéines ;
mélanger des réactifs pour floculer les protéines et éventuellement ajouter des agents de floculation pour l'agglomération des protéines floculées ;
séparer le jus des protéines floculées ;
concentrer le jus déprotéiné dans un décanteur/flotteur afin d'éliminer les matières en suspension et flottantes ; et
cristalliser le jus pour obtenir du sucre ;
et éventuellement les étapes consistant à :
ajouter un agent de décoloration et/ou de désodorisation dans le jus séparé ;
filtrer le jus pour obtenir un jus limpide ;
faire passer le jus limpide dans un système d'osmose inverse ou dans un système d'évaporation multiple-effet pour obtenir du jus concentré avant la cristallisation du jus en mesquite pour obtenir du sucre.

7. Système de production d'un jus clarifié à partir de canne à sucre, comprenant :
un moyen de lavage pour laver la canne à sucre par de l'eau et un biocide pour réduire la population microbienne ;
un moyen de pulvérisation pour pulvériser une solution de biocide sur la canne préparée avant son entrée dans la découpeuse et/ou le broyeur pour réduire l'activité microbienne ;
une découpeuse et des broyeurs pour découper et broyer la canne à sucre ;
une série de concasseurs pour extraire le jus à partir de la canne à sucre ;
un moyen d'addition de biocide au jus pendant le concassage ou dans les collecteurs de jus des concasseurs ;
un filtre gravitaire pour filtrer le jus ;
un réchauffeur pour chauffer le jus filtré à 35-85°C ;
un mélangeur pour mélanger l'agent de coagulation et l'agent de floculation dans le jus chauffé ; et
un moyen de séparation comportant un filtre gravitaire ou un système de décanteur/flotteur et un moyen de filtration pour séparer les matières coagulées afin d'obtenir un jus clarifié,
ledit jus clarifié ayant une quantité négligeable en microbes, inférieure à 500 ufc par ml.

8. Système de production de jus pour conditionnement, comprenant :
un système de production d'un jus clarifié selon la revendication 7 ;
un filtre pour filtrer le jus clarifié ; et
un moyen de pasteurisation et de conditionnement pour le jus filtré et comprenant éventuellement :
un mélangeur pour l'addition d'un agent de décoloration et/ou de désodorisation ; et
un filtre sous pression pour filtrer le jus avant de faire passer le jus dans un filtre de polissage.

9. Système de production de sucre à partir de canne à sucre, comprenant :
un système de production d'un jus clarifié selon la revendication 7 ;
une série de réchauffeurs pour le chauffage du jus à 80-100°C ;
un moyen de séparation, pour séparer le jus chauffé des protéines floculées, comportant un système de décanteur/flotteur ou un filtre gravitaire ; un moyen de filtration pour filtrer le jus déprotéiné ;
un moyen de concentration pour concentrer le jus ; et
un moyen de cristallisation pour produire le sucre.

10. Système de production de sucre à partir de canne à sucre selon la revendication 9, dans lequel le moyen de filtration du système de production de sucre est un filtre sous pression et/ou
le moyen de concentration est un système d'osmose inverse ou un système d'évaporateur multiple-effet ou un système d'évaporation et le moyen de cristallisation est une série de schémas de cristallisation en bassine afin de produire du sucre.

11. Système de production d'éthanol à partir de canne à sucre, comprenant :
un système de production d'un jus clarifié selon la revendication 7 ; et
un dispositif de fermentation.

12. Système de production d'un jus clarifié à partir de canne à sucre selon la revendication 7, dans lequel le système de décanteur/flotteur comprend une cuve de décantation pour décanter le jus ; une courroie sans fin inclinée en rotation entre au moins deux rouleaux disposés au dessus de la cuve de décantation ayant une pluralité de pales courbes adaptées sur la courroie afin de récupérer les matières flottantes sur le dessus du liquide dans la cuve de décantation et les déposer au niveau d'un point prédéterminé ; une exprimeuse à double courroie pour exprimer la suspension quittant le fond de la cuve de décantation pour séparer les matières solides du filtrat et recirculer le filtrat et une sortie pour soutirer le jus clarifié.

13. Système de production d'un jus clarifié à partir de canne à sucre selon la revendication 12, dans lequel les pales courbes sont des pales perméables ou perforées pour récupérer les matières flottantes sur le dessus du jus et permettre le passage du jus à travers les pales et/ou
l'exprimeuse à double courroie comprend au moins deux courroies sans fin faites en toile filtrante et disposées l'une au dessus de l'autre, en rotation dans des directions opposées, afin d'obtenir une filtration de la suspension entre les toiles initialement par gravité puis par exprimage et cisaillement des matières solides entre les courroies, un racleur pour au moins une courroie pour éliminer les matières solides déposées sur la courroie et un moyen de lavage pour chaque courroie pour laver la courroie raclée.

14. Système de production d'un jus clarifié à partir de canne à sucre selon la revendication 7, dans lequel le filtre gravitaire comprend une toile filtrante sans fin en rotation continue ou intermittente entre au moins deux rouleaux pour la filtration du jus, une cuvette d'alimentation pour que la courroie prenne la forme d'une cuvette, un racleur pour éliminer les matières solides déposées sur la courroie, un moyen de lavage pour laver la courroie avant l'entrée dans la cuvette, et un plateau de récupération de filtrat pour récupérer le jus filtré
où le filtre gravitaire comprend éventuellement un moyen d'exprimage tel qu'un moyen par courroie d'exprimage/plateau d'exprimage avant le racleur pour exprimer les matières solides déposées sur la toile filtrante.

15. Système de production de jus pour conditionnement à partir de canne à sucre selon la revendication 8, dans lequel le filtre sous pression à courroie comprend : une chambre de filtration fermée ayant une entrée pour l'alimentation en jus devant être filtré, une toile filtrante divisant la chambre de filtration en chambre d'alimentation et chambre de filtrat, un support perforé pour supporter la toile filtrante, un moyen d'exprimage pour exprimer les matières solides déposées sur la toile filtrante et une pompe pour apporter le jus à une pression élevée.

16. Système de production de jus pour conditionnement à partir de canne à sucre selon la revendication 15, dans lequel la chambre fermée comprend éventuellement une chambre d'alimentation et une chambre de filtrat séparables l'une de l'autre et un moyen de fermeture pour fermer et ouvrir les chambres et/ou le moyen d'exprimage comprend éventuellement un moyen pour apporter de l'air à une pression élevée ou un moyen d'exprimage par courroie pour exprimer les matières solides, ou les deux.

17. Système de production de jus pour conditionnement à partir de canne à sucre selon la revendication 15, la toile filtrante pouvant être prévue sous forme d'une courroie sans fin en rotation entre au moins deux rouleaux et préférablement entre plus de deux rouleaux de manière intermittente.
